# EUROPEAN PATENT SPECIFICATION

(11) **EP 3 133 001 B1**
(45) Date of publication and mention of the grant of the patent: **12.06.2019**
(21) Application number: 15779443.9
(22) Date of filing: 08.04.2015
(51) Int. Cl.: B62D 63/06, B62D 63/08, B60P 1/43, B60P 3/06, B60D 1/06, B60P 3/073, B60P 3/10, B60P 3/42

(54) **MODULAR TRAILER**
MODULARER ANHÄNGER
REMORQUE MODULAIRE

(30) Priority: 16.04.2014 ES 201430574
(43) Date of publication of application: 22.02.2017
(73) Proprietor: Little Way Team, S.L., 50410 Cuarte De Huerva (Zaragoza) (ES)
(72) Inventor: JESÚS MARÍA, Sánchez Cabeza, E-50410 Cuarte de Huerva (Zaragoza) (ES)
(74) Representative: Schäfer, Matthias W.
(86) International application number: PCT/ES2015/070276
(87) International publication number: WO 2015/158944

(56) References cited:
- EP-A1- 1 954 552
- WO-A1-2006/096938
- AU-A1- 2003 203 647
- FR-A1- 2 735 733
- US-A- 4 480 851
- US-A1- 2006 091 646
- US-B1- 6 428 035
- US-B1- 6 511 092

## Description

### Object of the Invention

This descriptive report relates, as its title indicates, to a trailer module with a fold-down configuration that can be coupled to motor vehicles, **characterised** in that it incorporates a main frame module comprising a tow-bar assembly, two supports with retractable wheels, and a self-supporting chassis on which supplementary modules can be fitted, such as:
- a motorcycle carrier module, or
- a nautical module, or
- a bicycle carrier module, or
- a special transport module, or
- a luggage carrier module, or
- a mixed-load module,
- and a light and registration number plate module of a width proportional to the trailer's wheelbase.

The object of the invention is to achieve a folding, compact, self-contained trailer that facilitates storage and handling in confined spaces, on which any of the modules in the invention can be quickly and safely fitted to satisfy user's requirements.

### Background of the invention

Current trailers intended for the transport of items such as motorcycles, bicycles, jet skis, etc., shape the design of the trailer structure to each specific type of item, with the disadvantage that the user needs to purchase one or more different trailers, which in turn leads to the added drawback of storage space when the trailers are not in use, although this drawback can be diminished by using folding or detachable trailers.

In order to overcome these drawbacks, patent CA2683129 refers to a trailer of extendable length and width, capable of carrying a range of vehicles from a motorcycle to a boat.

Patent EP1954552 describes a folding trailer for transporting motorcycles, capable of transporting one or more motorcycles, in which the axle can be fitted to and detached from the trailer.

Another solution is presented in patent ES2415554, which describes a light trailer to be coupled to motor vehicles by means of the usual devices such as tow-bar or hook and whose main purpose is to transport small sized vehicles, such as motorcycles or quads. For that purpose, the trailer can be folded and extended telescopically, as it describes a rear protrusion of variable length made up of two or more telescopic extensions, which, when folded, enable the trailer to be stored vertically to occupy minimal space. Another solution can be found in patent FR2735733, where a trailer with telescopic side members and a folding configuration is described. AU 2003203647 A1 and US 4480851 A describe other collapsible trailers.

Patent US20030155748 describes a modular trailer based on a chassis frame that includes at least one pair of side members and a plurality of cross members, which enable the trailer to be adapted to the particular load to be transported.

### Description of the invention

In order to provide a solution to such problems, a modular trailer has been devised, that comprises a main chassis module, equipped with fastening means on which any of the modules described in the invention can be attached via easy fasteners in such a way as to enable the user to fulfil his/her requirements without the need to purchase complete trailers but rather to simply acquire the individual modules required for his/her purposes.

Different modules are planned for the specific transport of motorcycles, jet skis, small boats, baggage, special loads, and mixed-loads combined with a module that fits onto any of the afore-mentioned modules and carries the lights and registration number plate.

The main frame module comprises a self-supporting chassis assembly, a tow-bar assembly and two sets of retractable wheels. This is the module that hooks or couples to the motor vehicle and onto which the various modules presented in the invention are also attached, thus providing the user with a choice of transport means tailored to his/her specific requirements.

When not in use, the module can be folded to occupy minimal space during storage and in the folded position, the twin sets of wheels ensure easy manoeuvrability.
The tow-bar assembly comprises at least two sections joined together by hinged joints so that it can be folded with the main frame module to minimise storage space.

In this invention, the tow-bar assembly is configured with three sections of varying length.

In an alternative embodiment, the tow-bar assembly has various balls arranged in such a way as to enable attachment of various accessories or commercially available fittings on which to load bicycles, dog carriers, bag carriers, etc.

The light and registration plate module comprises a rectangular structure with two side pockets, where the lights are housed, which leaves a space between the two pockets where the registration number plate is fitted.
The rear of this module is fitted with fastening devices to enable it to be attached to any of the modules presented in the invention.

The motorcycle carrier module is specially configured for the transportation of motorcycles, which can be loaded easily thanks to the tilting of the module platform, which means that the motorcycle locks safely into position to ensure its properly secure transportation,
It has a folding platform and a rocker arm assembly to facilitate positioning of the front wheel of the motorcycle when it is loaded onto the platform.

The bicycle carrier module is specially configured for transporting several bicycles, stowed perpendicular to the module and locked securely in position to ensure perfect transportation. This module has several supports which are positioned vertically on a folding platform securing the various bicycles with the aid of jaw grips fitted on the module platform.

The nautical module is specially configured for the transportation of a jet-ski or small boats, which are locked securely into position to ensure perfect transportation.
This module has several side supports, fitted with rollers and wheels, to make loading and positioning the jet-ski or boat on the module easier, with the aid of a hand winch.

The special transport module is configured specifically for the transport of agricultural, gardening, or cleaning equipment or golf carts, etc., which are locked securely into position to guarantee perfect transportation.
This module has a tilting platform to make loading the relevant item with the aid of the hand winch easier.

The luggage carrier module is configured especially for the transport of various objects in a large chest, which is secured by means of a positioning bracket to the platform of the main frame module; this chest has a fold-down structure for easier storage when not in use.

The mixed-load module is specially configured for transporting a combination of bicycle/ motorcycle, motorcycle and cargo, bicycles, miscellaneous cargo, a dog carrier, bicycles and miscellaneous cargo, skis and miscellaneous cargo, etc., which is secured by means of a positioning bracket to the platform of the main frame module.
The mixed-load module has a number of balls fitted on the structure, which can be permanent or removed, to make securing the various accessories easier and thus to enable a combination of loads to be transported.

The assembly formed by coupling the main frame module to any of the modules described in the invention can be folded as one item to facilitate storage; similarly, each individual module can be folded separately to enable them to also be stored in confined spaces.

### Advantages of the Invention

The modular trailer presented herein offers many advantages over currently available trailers, most notably in that it provides for various transportation requirements, as any of the modules described in the invention can be coupled to the self-supporting chassis quickly and safely, depending on user's needs.

Another most important advantage is that the different modules are configured for transporting motorcycles, jet-skis, small boats, baggage, special loads, mixed loads and the registration plate / lights, adjusted to a width proportional to the trailer's wheelbase.

Another important advantage is that the assembly formed by coupling the main frame module to any of the modules described in the invention can be folded as a single unit to facilitate storage; similarly, each of the modules can be folded separately to also allow for storage in confined spaces.

A further significant advantage is that the tow-bar assembly has folding means to facilitate its storage.

Another important advantage further to the one indicated above is that the tow-bar assembly is configured, in an alternative embodiment, with several balls distributed along the structure, which can be either permanent or removable, on which various commercially available accessories can be fitted.

### Description of the figures

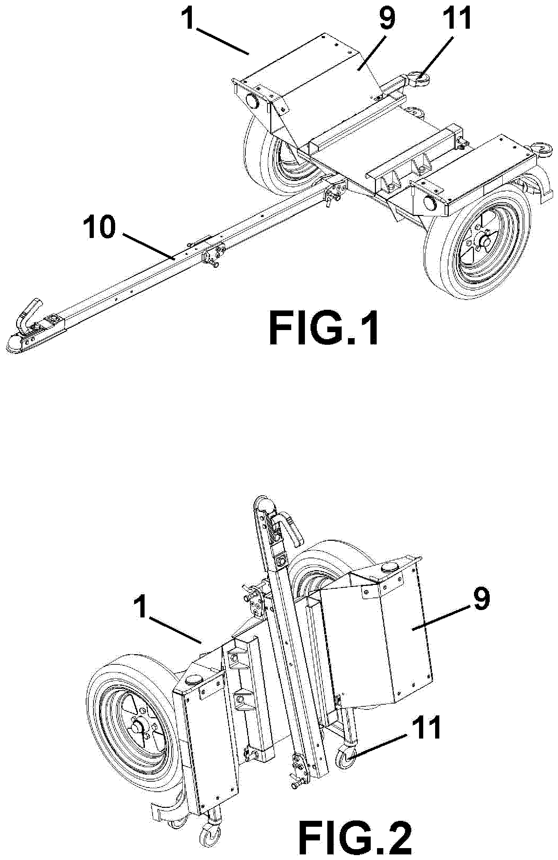

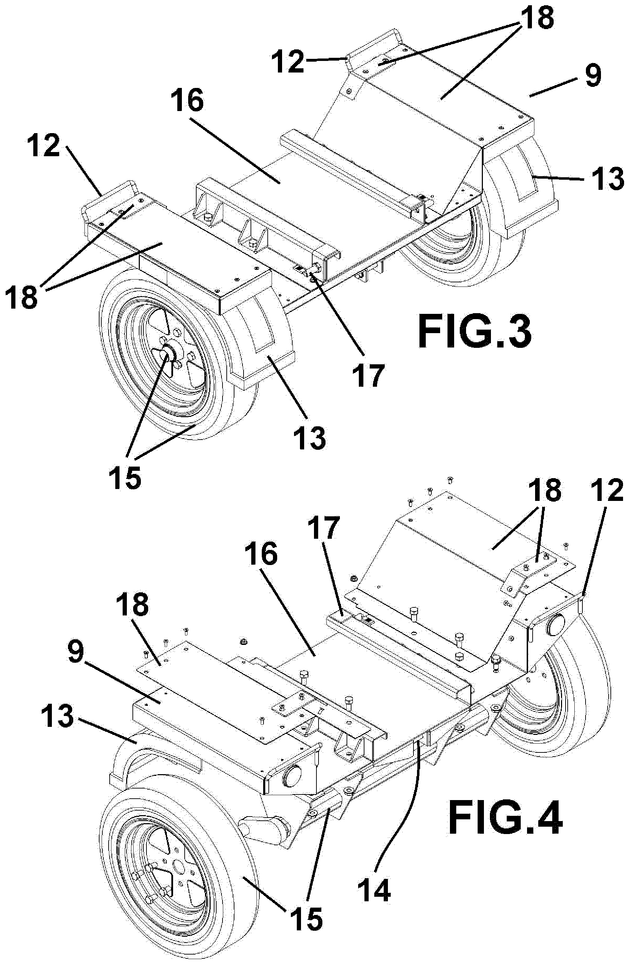

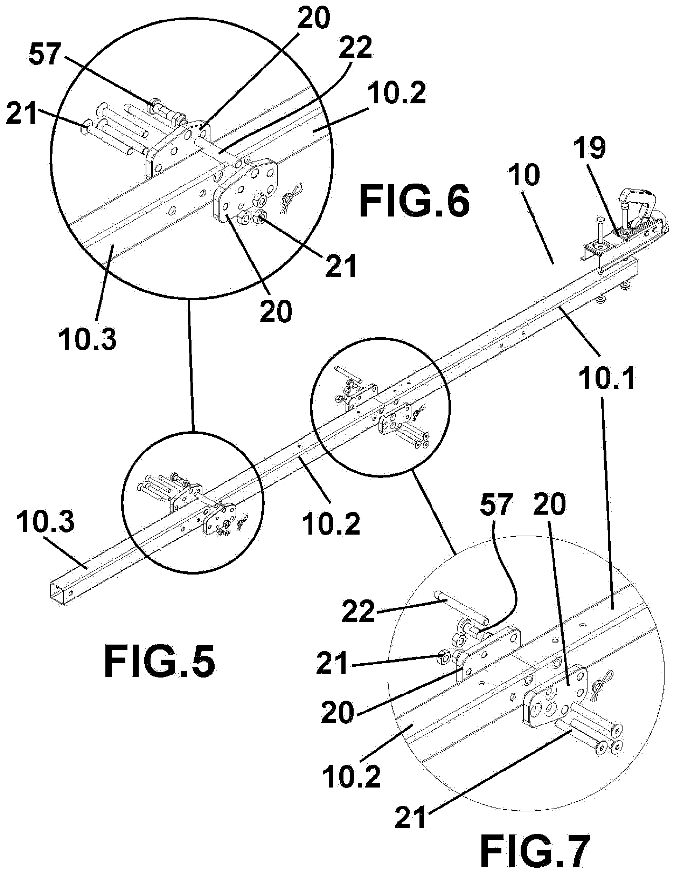

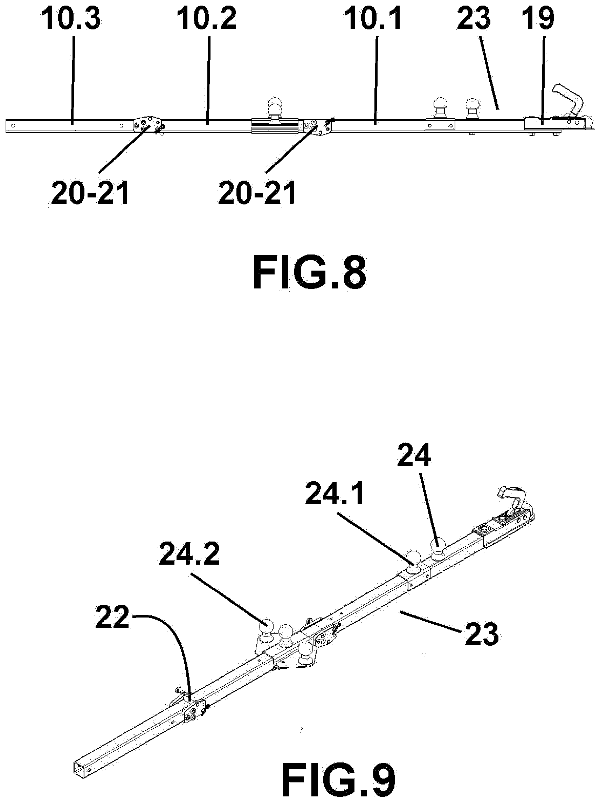

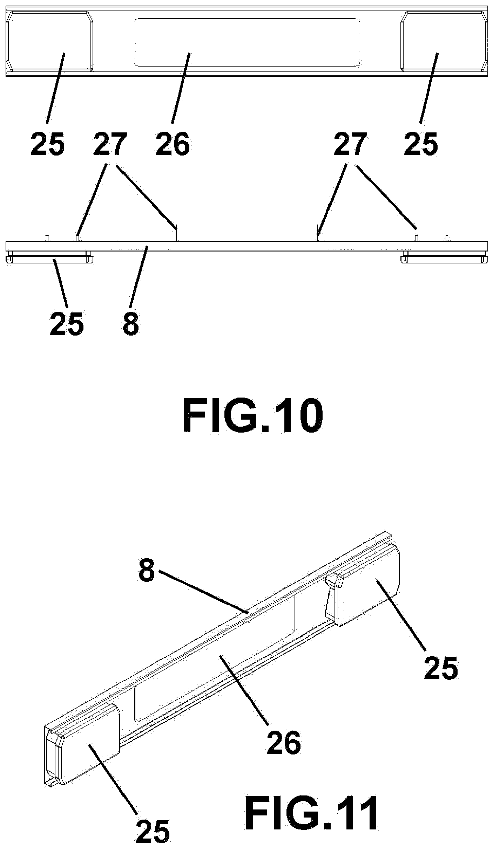

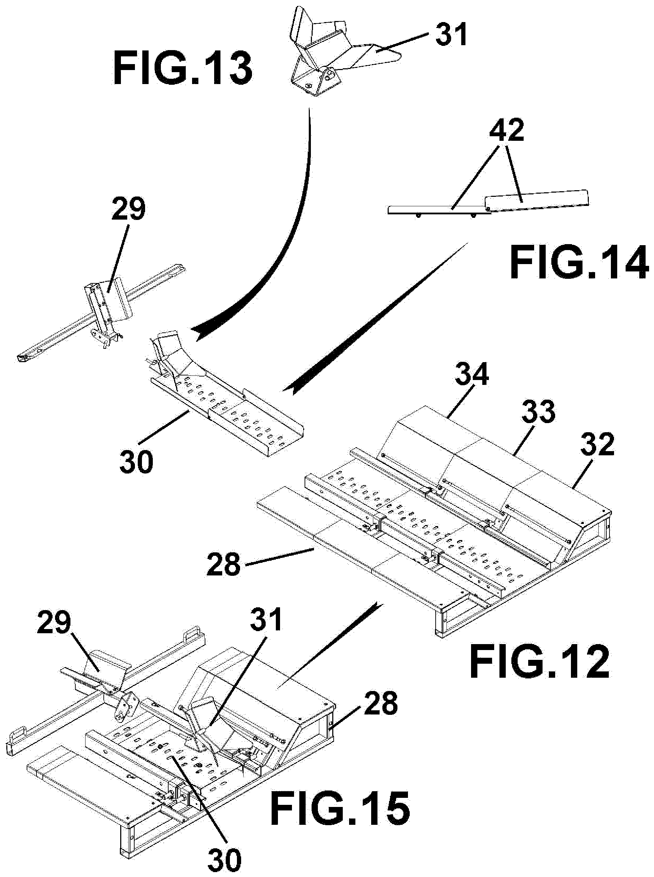

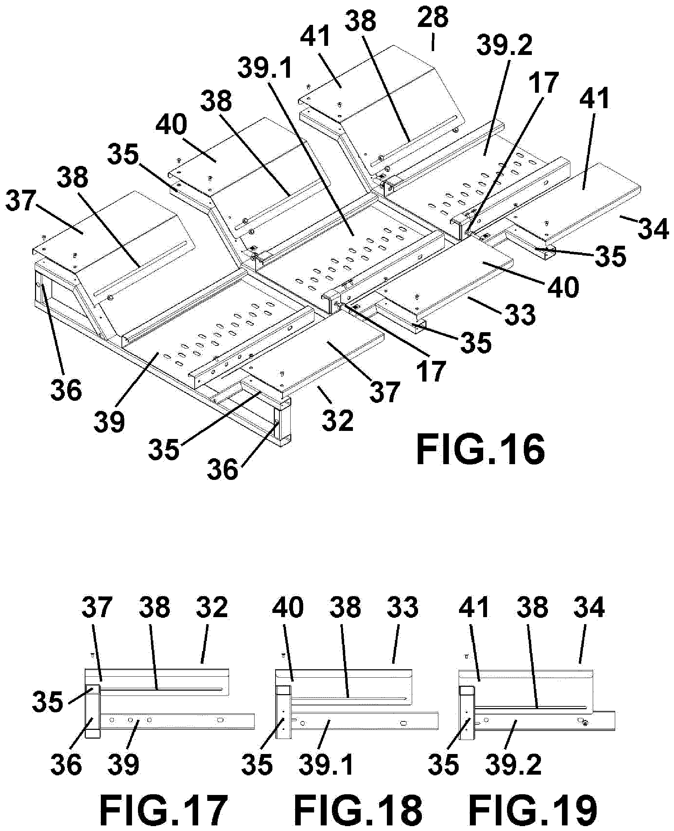

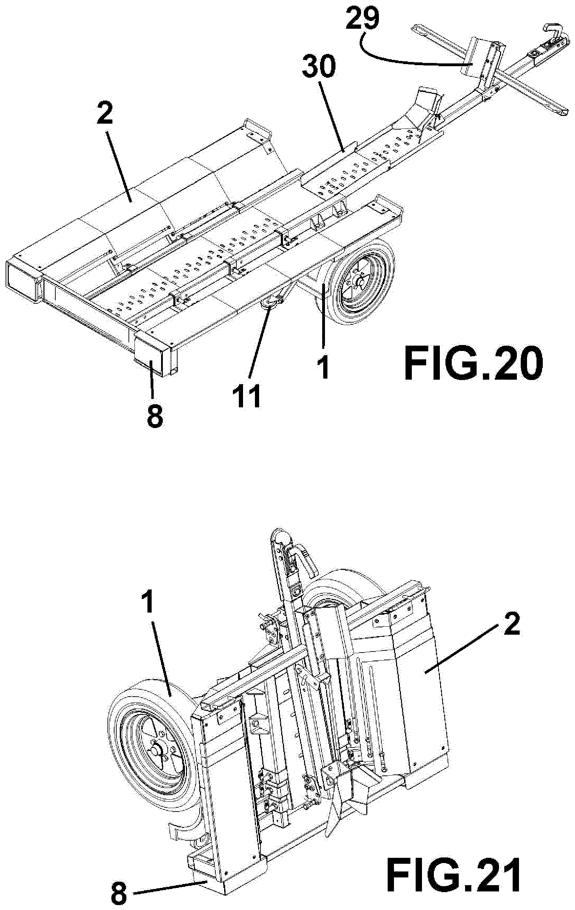

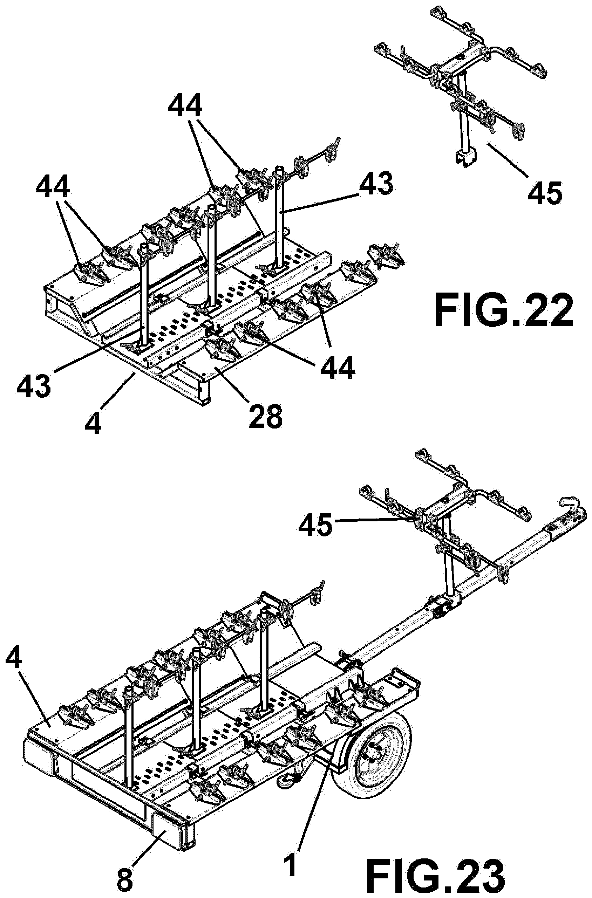

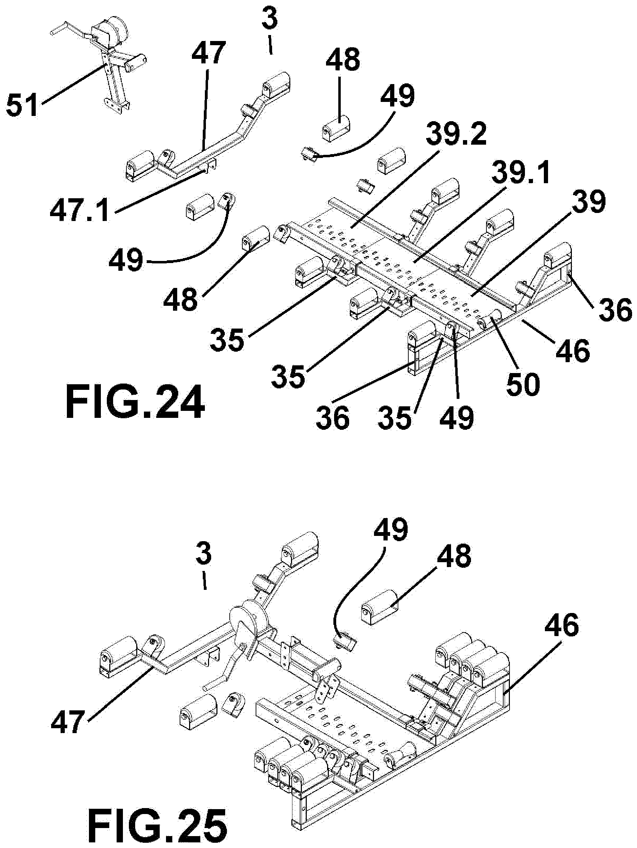

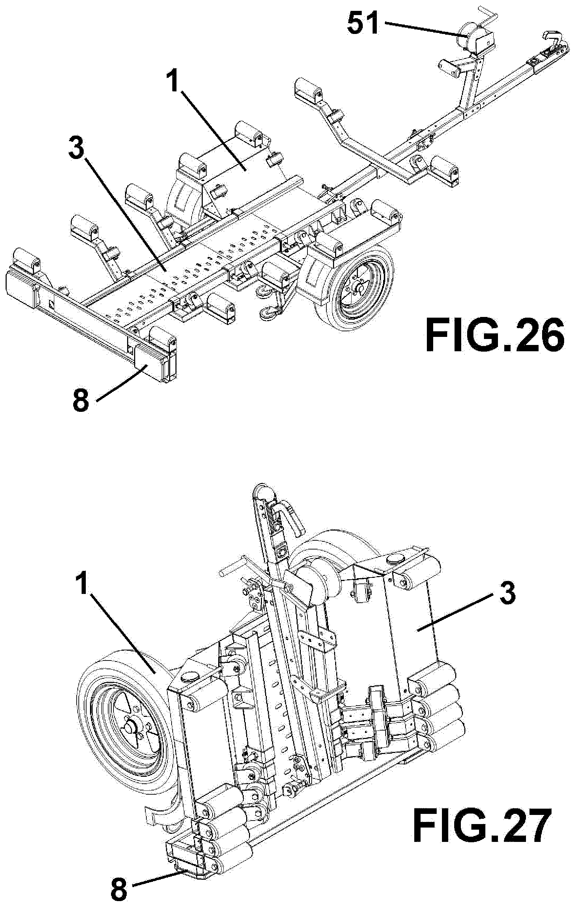

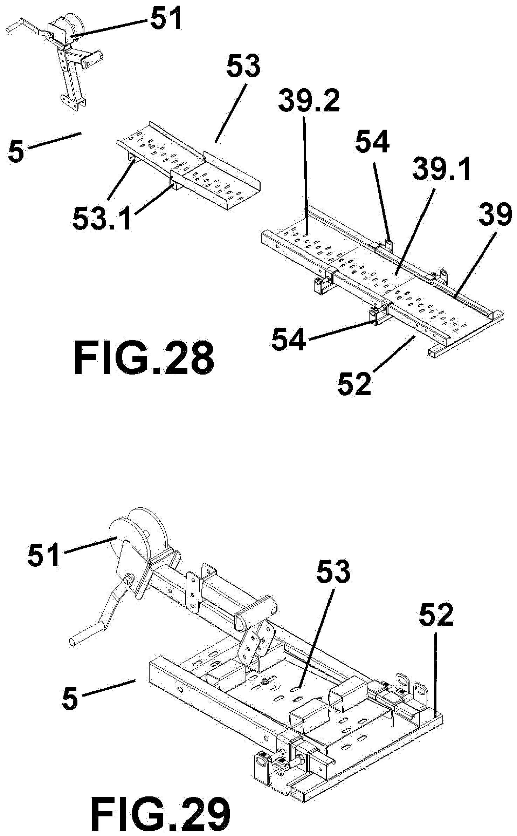

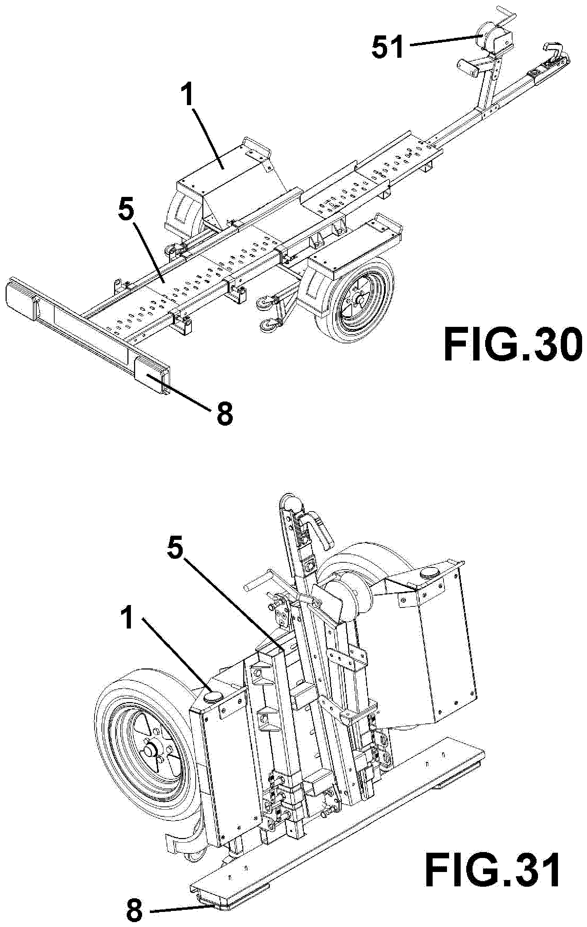

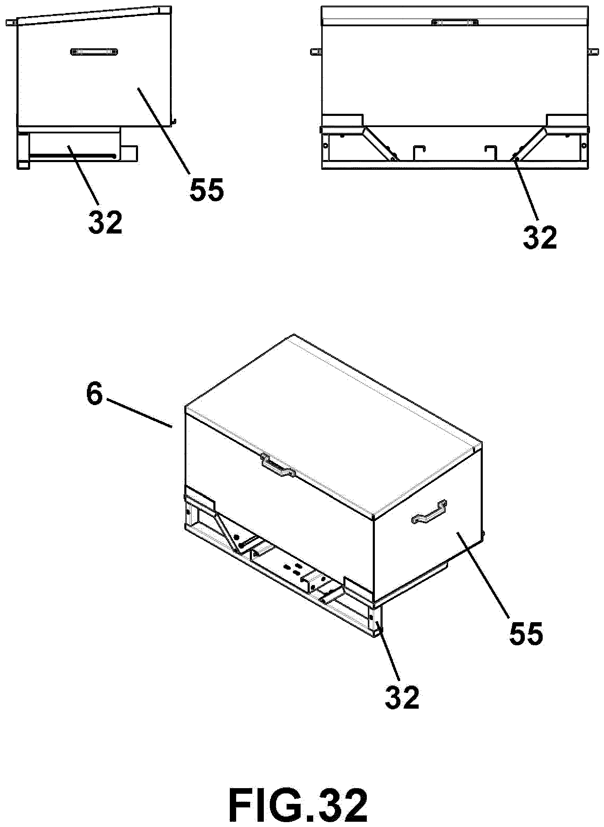

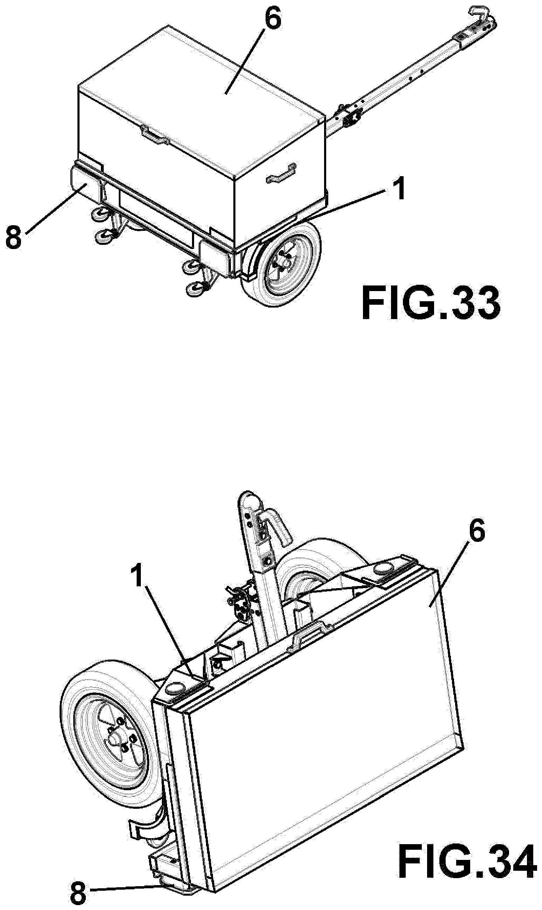

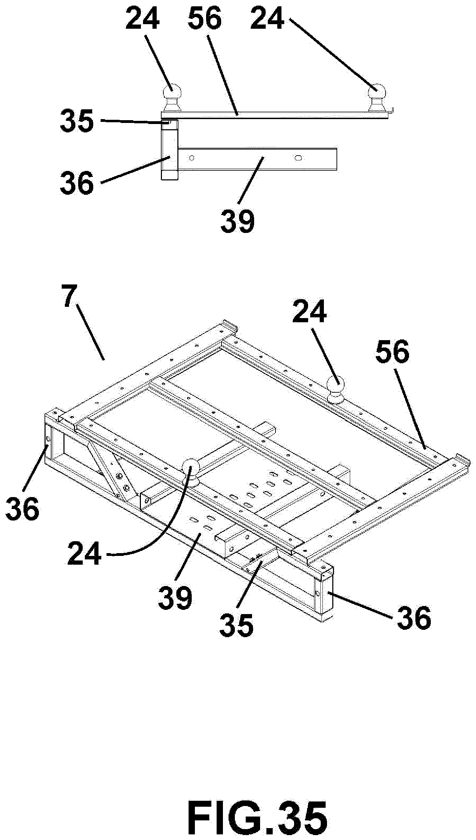

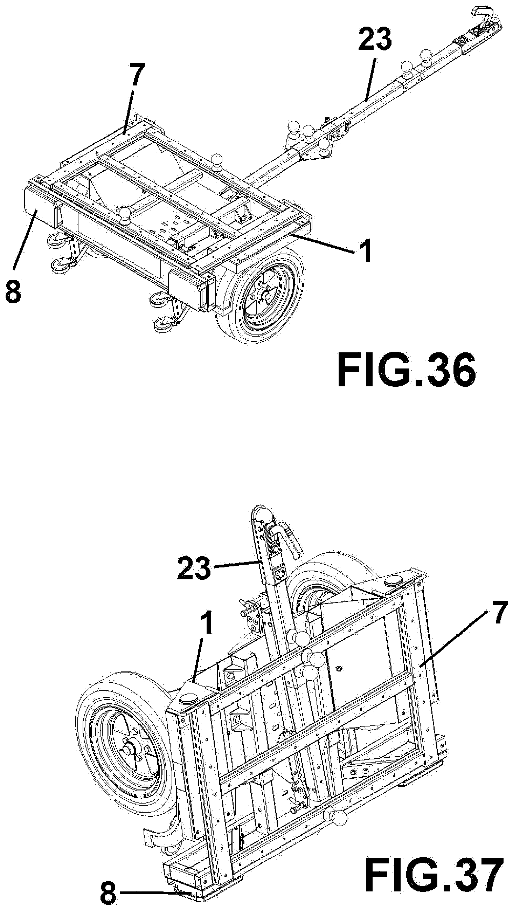

For clearer comprehension of the object of the present addition, a preferred practical embodiment of it is shown in the attached drawing.

In said drawing,
Figure -1- is a perspective view of the main frame module.
Figure -2- is a perspective view of the main frame module when folded, in which the lower set of wheels for easy manoeuvrability is depicted.
Figure -3- shows a rear view of the self-supporting chassis.
Figure -4- is a front view of the self-supporting chassis with construction details.
Figure -5- is a perspective view of the tow-bar assembly.
Figure -6- is a perspective view of the coupling between different sections of the tow-bar.
Figure -7- is a perspective view of the coupling between different sections of the tow-bar.
Figure -8- shows a profile view of the tow-bar, in its alternative embodiment, fitted with several balls along the structure.
Figure -9- is a perspective view of the tow-bar in its alternative embodiment, fitted with several balls along the structure.
Figure -10- shows a side elevation view of the light and registration plate module.
Figure -11- is a perspective view of the light and registration plate module.
Figure -12- is a perspective view of the motorcycle carrier module.
Figure -13- is a perspective view of a construction detail of the motorcycle carrier module rocker arm assembly.
Figure -14- is a perspective view of a constructive detail of the motorcycle carrier module wheel guide assembly.
Figure -15- is a perspective view of the folded motorcycle carrier module.
Figure -16- is a perspective view of the motorcycle module platform, showing construction details.
Figure -17- shows an elevation view of the rear module of the motorcycle carrier platform.
Figure -18- shows an elevation view of the centre module of the motorcycle carrier platform.
Figure -19- shows an elevation view of the front module of the motorcycle carrier platform.
Figure -20- shows a perspective view of the motorcycle carrier module coupled to the main frame module.
Figure -21- shows a perspective view of the motorcycle carrier module coupled to the main frame module and folded together.
Figure -22- is a perspective view of the bicycle carrier module, showing construction details.
Figure -23- is a perspective view of the bicycle carrier module coupled to the main frame module.
Figure -24- is a perspective view of the nautical module, showing construction details.
Figure -25- is a perspective view of the folded nautical module.
Figure -26- is a perspective view of the nautical module coupled to the main frame module.
Figure -27- is a perspective view of the nautical module coupled to the main frame module and folded together.
Figure -28- is a perspective view of the special transport module, showing construction details.
Figure -29- is a perspective view of the folded special transport module.
Figure -30- shows a perspective view of the special transport module coupled to the main frame module.
Figure -31- shows a perspective view of the special transport module coupled to the main frame module and folded together.
Figure -32- shows elevation, profile and perspective views of the luggage carrier module.
Figure -33- is a perspective view of the luggage carrier module coupled to the main frame module.
Figure -34- is a perspective view of the luggage carrier module coupled to the main frame module and folded together.
Figure -35- shows the profile and perspective views of the mixed-load module.
Figure -36- shows a perspective view of the mixed-load module coupled to the main frame module fitted with the tow-bar assembly with balls.
Figure -37- shows a perspective view of the mixed-load module coupled to the main frame module and folded together.

### Preferred embodiment of the invention

The modular trailer with a fold-down configuration designed to be coupled to motor vehicles presented herein features a main frame module (1) comprising a self-supporting chassis (9), a tow-bar assembly (10 or 23), and two support brackets with retractable wheels (11).

The self-supporting chassis (9) comprises a base structure with connection handles (12), mudguards (13) and the tow-bar coupling (14), supported by an axle with wheels (15). This structure is configured with a central recess fitted with a reinforcement profile (16) to which the other modules can be attached by means of quick lock fittings (17). The sides of the base structure are configured with a reinforcement (18) folded in a 'Z' shape that covers the space between the sides and the central recess.

The tow-bar assembly (10) comprises at least two sections - a front section (10.1), with the coupling head (19), a central section (10.2), and a rear section (10.3), which houses the tow-bar coupling (14) of the self-supporting chassis (9).

The front section (10.1) and the central section (10.2) are coupled by means of two fastening plates (20) fitted on either side of the sections opposite each other, joined together by means of anchoring means (21), self-anchoring means (57) and a pin (22) which fits through the bottom of the tow-bar assembly (10).

The central (10.2) and rear sections (10.2) are coupled by means of two fastening plates (20) fitted on either side of the sections opposite each other, joined together by means of anchoring means (21), self-anchoring means (57) and a pin (22) which fits through the top of the tow-bar assembly (10).

In an alternative embodiment, the tow-bar assembly (23) is fitted with balls (24), balls with support (24.1) and sets of balls (24.2) that can be either fitted permanently or removable.

The supplementary modules, which are attached by means of quick lock fittings (17), can be selected from the following group:
- a motorcycle carrier module (2)
- a nautical module (3),
- a bicycle carrier module (4),
- a special transport module (5)
- a luggage carrier module (6),
- a mixed-load module (7)
- a light and registration plate module (8), all configured in proportional width to the trailer wheelbase.

The light and registration plate module (8) comprises a rectangular structure with pockets on either side in which the lights (25) are housed, leaving a space between the two pockets in which the registration number plate (26) is fitted, including fastening devices (27) on the back.

The motorcycle carrier module (2) comprises a folding platform (28), a wheel stop assembly (29), a wheel guide assembly (30) and a rocker arm assembly (31).
The folding platform (28) comprises a rear module (32), a central module (33) and a front module (34).

The rear module (32) is made up of a support structure (35) with reinforcements (36) at both ends, which is configured with raised sides in relation to its base and covered by rear support plates (37) configured with an inclined extension and fitted with a slot (38).
A profile section (39) is coupled onto the support structure (35) connecting the central module (33) by means of quick lock fittings (17).

The central module (33) is made up of a support structure (35) with raised sides in relation to its base and covered by the central support plates (40), which are larger than the rear support plates (37) and fitted with a slot (38).
A profile section (39.1) is coupled onto the support structure (35) connecting the front module (34) by means of quick lock fittings (17).

The front module (34) is made up of a support structure (35) with raised sides in relation to its base and covered by the front support plates (41), which are larger than the central support plates (40) and fitted with a slot (38).
A profile section (39.2) is coupled onto the support structure (35) connecting the wheel guide assembly (30) by means of quick lock fittings (17).

The support plates (37-40 and 41) are connected to each other in such a way that the slots are staggered in line to enable subsequent folding, and in the same way, the profile sections (39-39.1 and 39.2), can be coupled to each other due to their dimensional difference, to enable them subsequently to be folded down.

The wheel stop assembly (29) comprises a support to connect it to the tow-bar assembly (10) and a clamping bracket with handles.

The wheel guide assembly (30) comprises two guiding sections (42) connected together and coupled to the tow-bar assembly (10), with a rocker arm assembly (31) fitted at the free end.

The bicycle carrier module comprises a folding platform (28) and several clamping brackets (43), fitted vertically and distributed at equal distances along the centre area of the folding platform (28), as well as wheel clamps (44) fitted on the support plates (37-40 and 41) on the folding platform (28) and also includes a further clamping support (45) coupled to the tow-bar assembly (10).

The nautical module (3) comprises a folding platform (46), a support structure (47), and a hand winch (51).

The folding platform (46) comprises three support structures (35) connected to each other by profile sections (39-39.1 and 39.2), including roller supports (48) at the ends of the support structures (35) and wheel supports (49) on the inclined portions of said structures, including as well as a loading roller (50) at the free end of the profile sections (39).

Two sets of roller supports (48) and two sets of wheel supports (49) are fitted at the top and inclined portion of the reinforcements (18) on the self-supporting chassis (9).

The support structure (47), configured with raised sides in relation to its base, has roller supports (48) and wheel supports (49) on the inclined sections, including a clamping support (47.1) in the lower part of its middle portion to couple the structure to the tow-bar assembly (10).

The special transport module (5) comprises a folding platform (52), a guide unit (53), and a winch (51).
The folding platform (52) is made up of three support structures (54), connected to each other by profile sections (39-39.1 and 39.2).

The guide assembly (53) comprises two guiding sections (42) joined together and coupled to the tow-bar assembly (10) by means of profile bars (53.1) on its lower portion.

The luggage carrier module (6) comprises a fold-down chest (55) and a rear module (32).

The mixed-load module (7) is formed by a platform (56) coupled onto a support structure (35) with reinforcements (36) at both ends, configured with raised sides in relation to its base, with a profile section (39) built onto the support structure (35) to connect the self-supporting chassis (9).
The platform (56) is designed with multiple structural sections to form a flat rectangular platform on which permanent or removable balls (24) are fitted.

The assembly formed when any of the modules (2-7) described in the invention are connected to the main frame module (1) can be folded as a single unit, and both the main frame module (1) and all the additional modules (2-7) can also be folded individually.

## Claims

1. A folding, modular trailer that can be hitched to motor vehicles, consisting of a main frame module (1) which comprises a tow-bar assembly (10, 23), a self-supporting chassis (9) fitted with a base structure and connection handles (12), mudguards (13), tow-bar coupling (14) and an axle with wheels (15), **characterised in that** the base structure of the self-supporting chassis (9) is configured with a central recess fitted with a reinforcement profile (16), on which other supplementary modules (2 - 7) can be attached by means of quick lock fittings (17), the space between the sides and the central recess being covered by a reinforcement (18) folded into a "Z" shape;
The tow-bar assembly (10, 23) comprises at least two sections:
- a front section (10.1), with a coupling head (19),
- a central section (10.2) and rear section (10.3) that couple with the tow-bar coupling (14) on the self-supporting chassis (9),
- the front section (10.1) being coupled to the central section (10.2) by means of two fastening plates (20) positioned on either side of the sections and opposite each other, joined together by means of anchoring means (21), self-anchoring means (57), and a pin (22) fitted on the underside of the tow-bar (10),
- the central section (10.2) being coupled to the rear section (10.3) by means of two fastening plates (20) positioned on either side of the sections and opposite each other, joined together by means of anchoring means (21), self-anchoring means (57), and a pin (22) fitted on the top side of the tow-bar (10),
- and **in that** the main frame module (1) includes two support brackets with retractable wheels (11).

2. A modular trailer, according to claim 1, **wherein** the tow-bar assembly (23) has balls (24), balls with support (24.1) and sets of balls (24.2), fitted as permanent or removable fixtures.

3. A modular trailer, according to claim 1, **wherein** a light and registration number plate module (8) comprising a rectangular structure with two side pockets in which the lights (25) are housed, allowing a space between the two pockets that houses the registration number plate (26), and which includes fastening devices (27) on the back is envisaged as a supplementary module to be attached by fastening means.

4. A modular trailer, according to claim 1, **wherein** a motorcycle carrier module (2) comprising a wheel stop assembly (29), a wheel guide assembly (30) and a folding platform (28) configured by a rear module (32), a middle module (33) and a front module (34) is envisaged as a supplementary module to be attached by means of quick lock fittings (17).

5. A modular trailer, according to claim 4, **wherein** the rear module (32) comprises a support structure (35) with reinforcements (36) at both ends, configured with raised sides in relation to its base, covered by rear support plates (37) configured with an inclined extension and fitted with a slot (38), coupling, on the base of the support structure (35), a profile section (39) connecting the central module (33) by means of quick lock fittings (17); the central module (33) comprises a support structure (35), configured with raised sides in relation to its base, covered by central support plates (40), configured with an inclined extension, larger than the rear support plates (37) and fitted with a slot (38), coupling onto the base of the support structure (35) a profile section (39.1) connecting the front module (34) by means of quick lock fittings (17); the front module (34) comprises a support structure (35), configured with raised sides in relation to its base, covered by front support plates (41) configured with an inclined extension, larger than the central support plates (40) and fitted with a slot (38), coupling onto the base of the support structure (35) a profile section (39.2) connecting the wheel guide assembly (30) by means of quick lock fittings (17).

6. A modular trailer, according to claims 4 and 5, **wherein** the support plates (37-40 and 41) are connected to each other in such a way that the slots are aligned in a staggered formation to enable them subsequently to be folded; in the same way, the profile sections (39-39.1 and 39.2) can be coupled to each other, due to their dimensional difference, to enable them subsequently to be folded.

7. A modular trailer, according to claim 4, **wherein** the wheel stop assembly (29) comprises a support connecting to the tow-bar (10) and a clamping bracket with handles; and the wheel guide assembly (30) comprises two guiding sections (42), connected to each other and coupled to the tow-bar (10), incorporating a rocker arm assembly (31) at the free end.

8. A modular trailer, according to claim 1, **wherein** a bicycle carrier module (4) comprising a folding platform (28) and several clamping brackets (43), fitted vertically and distributed at equal distances along the centre of the folding platform (28), connected to sets of wheel clamps (44) attached on the support plates (37-40 and 41) of the folding platform (28), and which also includes a clamping support (45) coupled to the tow-bar (10) is envisaged as a supplementary module to be attached by quick lock fittings (17).

9. A modular trailer, according to claim 1, **wherein** a nautical module (3) comprising a support structure (47), a hand winch (51) and a folding platform (46) made of three support structures (35), connected together by means of profile sections (39-39.1 and 39.2),including roller supports (48) at the ends of the support structures (35) and wheel supports (49) on the side walls of said structures, further including a loading roller (50) at the free end of the profile section (39) and two sets of roller supports (48) and two sets of wheel supports (49) on the top part and the inclined portion of the reinforcements (18) on the self- supporting chassis (9) is envisaged as a supplementary module to be attached by quick lock fittings (17).

10. A modular trailer, according to claim 9, **wherein** the support structure (47) is configured with raised sides in relation to its base, including roller supports (48) on each side and wheel supports (49) on the inclined sections, including a clamping support (47.1) in the underside of its middle portion to couple the structure to the tow-bar (10).

11. A modular trailer, according to claim 1, **wherein** a special transport module (5) comprising a folding platform (52) consisting of three support structures (54), connected to each other by profile sections (39-39.1 and 39.2); a guide assembly (53) formed by two guiding sections (42) joined together and coupled onto the tow-bar (10) by means of profiles (53.1) fitted on its lower part; and a hand winch (51), is envisaged as a supplementary module to be attached via quick lock fittings (17).

12. A modular trailer, according to claim 1, **wherein** a luggage carrier module (6) comprising a fold-down chest (55) and a rear module (32) is envisaged as a supplementary module to be attached via quick lock fittings (17).

13. A modular trailer, according to claim 1, **wherein** a mixed-load module (7) comprising a platform (56) configured with various structural sections to form a flat rectangular platform, on which permanent or removable balls (24) are fitted, which attaches to a support structure (35) with reinforcements (36) at both ends, configured with raised sides in relation to its base and which has a profile section (39) fitted onto the support structure (35) connecting the self-supporting chassis (9) is envisaged as a supplementary module to be attached by quick lock fittings (17).

14. A modular trailer, according to any of the preceding claims, **wherein** the assembly formed by the coupling of the main frame module (1) with any of the modules (2-7) described in the invention can be folded as a single unit, and the main frame module (1) and all the additional modules (2-7) can be folded separately.

## Patentansprüche

1. Klappbarer, modularer Anhänger, welcher an Kraftfahrzeuge angekuppelt werden kann, bestehend aus einem Hauptrahmenmodul (1), welches eine Anhängebaugruppe (10, 23), ein mit einer Basisstruktur und Verbindungshandgriffen (12) ausgerüstetes selbsttragendes Chassis (9), Kotflügel (13), Anhängerkupplung (14) und einer Achse mit Rädern (15) aufweist, **dadurch gekennzeichnet, dass** die Basisstruktur des selbsttragenden Chassis (9) mit einer zentralen Aussparung ausgelegt ist, welche mit einem Verstärkungsprofil (16) ausgerüstet ist, auf welchem andere zusätzliche Module (2 - 7) mit Hilfe von Schnellverschlussbeschlägen (17) angebracht werden können, und wobei der Raum zwischen den Seiten und der zentralen Aussparung von einer in einer "Z"-Form gebördelten Verstärkung (18) abgedeckt wird;
die Anhängebaugruppe (10, 23) mindestens zwei Abschnitte aufweist:
- ein vorderer Abschnitt (10.1) mit einem Kupplungskopf (19),
- ein zentraler Abschnitt (10.2) und hinterer Abschnitt (10.3), welche sich an die Anhängerkupplung (14) an dem selbsttragenden Chassis (9) koppeln,
- wobei der vordere Abschnitt (10.1) an den zentralen Abschnitt (10.2) mit Hilfe von zwei Befestigungsplatten (20) gekoppelt ist, welche auf jeder Seite der Abschnitte und einander gegenüberliegend positioniert sind, welche mit Hilfe von Verankerungsmitteln (21), Selbstverankerungsmitteln (57) und einem an der Unterseite der Anhängestange (10) angebauten Bolzen (22) verbunden sind,
- wobei der mittlere Abschnitt (10.2) mit dem hinteren Abschnitt (10.3) mit Hilfe von zwei Befestigungsplatten (20) gekoppelt ist, welche auf jeder Seite der Abschnitte und einander gegenüberliegend positioniert sind, welche mit Hilfe von Verankerungsmitteln (21), Selbstverankerungsmitteln (57) und einem an der Oberseite der Anhängestange (10) angebauten Bolzen (22) verbunden sind,
- und dadurch, dass das Hauptrahmenmodul (1) zwei Stützhalterungen mit zurückziehbaren Rädern (11) umfasst.

2. Modularer Anhänger nach Anspruch 1, wobei die Anhängebaugruppe (23) Kugeln (24), Kugeln mit Abstützung (24.1) und Sätze von Kugeln (24.2) aufweist, welche als permanente oder abnehmbare Vorrichtungen angebracht sind.

3. Modularer Anhänger nach Anspruch 1, wobei ein Licht- und Nummernschildmodul (8), aufweisend eine rechteckige Struktur mit zwei Seitentaschen, in welchen Beleuchtungen (25) aufgenommen sind, wobei ein Raum zwischen den beiden Taschen zugelassen wird, welcher das Nummernschild (26) aufnimmt, und welches Befestigungsvorrichtungen (27) auf der Rückseite umfasst, als ein zusätzliches Modul vorgesehen ist, welches durch Befestigungsmittel anzubringen ist.

4. Modularer Anhänger nach Anspruch 1, wobei ein Motorrad-Trägermodul (2), umfassend eine Rad-Anschlagbaugruppe (29), eine Rad-Führungsbaugruppe (30) und eine durch ein hinteres Modul (32), ein mittleres Modul (33) und ein vorderes Modul (34) gestaltete klappbare Plattform (28), als ein zusätzliches Modul vorgesehen ist, welches mit Hilfe von Schnellverschlussbeschlägen (17) anzubringen ist.

5. Modularer Anhänger nach Anspruch 4, wobei das hintere Modul (32) eine Stützstruktur (35) mit Verstärkungen (36) an beiden Enden aufweist, welche mit erhöhten Seiten in Bezug auf ihre Basis ausgelegt ist, welche von hinteren Stützplatten (37) abgedeckt ist, welche mit einer geneigten Verlängerung ausgelegt und mit einem Schlitz (38) ausgerüstet sind und sich an der Basis der Stützstruktur (35) an einen Profilabschnitt (39) koppeln, welcher das zentrale Modul (33) mit Hilfe von Schnellverschlussbeschlägen (17) verbindet; das zentrale Modul (33) eine Stützstruktur (35) aufweist, welche mit erhöhten Seiten in Bezug auf ihre Basis ausgebildet ist, welche mit zentralen Stützplatten (40) abgedeckt ist, welche mit einer geneigten Verlängerung ausgelegt sind, welche größer als die hinteren Stützplatten (37) ist, und welche mit einem Schlitz (38) ausgerüstet sind und sich an der Basis der Stützstruktur (35) an einen Profilabschnitt (39.1) koppeln, welcher das vordere Modul (34) mit Hilfe von Schnellverschlussbeschlägen (17) verbindet; das vordere Modul (34) eine Stützstruktur (35) aufweist, welche mit erhöhten Seiten in Bezug auf ihre Basis ausgebildet ist, welche mit zentralen Stützplatten (41) abgedeckt ist, welche mit einer geneigten Verlängerung ausgelegt sind, welche größer als die zentralen Stützplatten (40) ist, und welche mit einem Schlitz (38) ausgerüstet sind und sich an der Basis der Stützstruktur (35) an einen Profilabschnitt (39.2) koppeln, welcher die Rad-Führungsbaugruppe (30) mit Hilfe von Schnellverschlussbeschlägen (17) verbindet.

6. Modularer Anhänger nach Ansprüchen 4 und 5, wobei die Stützplatten (37- 40 und 41) in solcher Weise miteinander verbunden sind, dass die Schlitze in einer versetzten Anordnung ausgerichtet sind, um es ihnen zu ermöglichen, anschließend geklappt zu werden; in der gleichen Weise können die Profilabschnitte (39 - 39.1 und 39.2) miteinander gekoppelt werden aufgrund ihres dimensionalen Unterschieds, um es ihnen zu ermöglichen, anschließend geklappt zu werden.

7. Modularer Anhänger nach Anspruch 4, wobei die Rad-Anschlagbaugruppe (29) eine Stütze, welche sich mit der Anhängestange (10) verbindet, und eine Klemmhalterung mit Griffen aufweist; und die Rad-Führungsbaugruppe (30) zwei Führungsabschnitte (42) aufweist, welche miteinander verbunden und an die Anhängestange (10) gekoppelt sind, und welche eine Schwenkhebelbaugruppe (31) an dem freien Ende enthalten.

8. Modularer Anhänger nach Anspruch 1, wobei ein Fahrradträgermodul (4), aufweisend eine klappbare Plattform (28) und mehrere Klemmhalterungen (43), welche vertikal angebracht und in gleichen Abständen entlang der Mitte der klappbaren Plattform (28) verteilt sind, welche mit Sätzen von Radklemmen (44) verbunden sind, welche auf den Stützplatten (37-40 und 41) der klappbaren Plattform (28) angebracht sind, und welches auch eine Klemmstütze (45) umfasst, welche an die Anhängestange (10) gekoppelt ist, als ein zusätzliches Modul vorgesehen ist, welches mit Schnellverschlussbeschlägen (17) anzubringen ist.

9. Modularer Anhänger nach Anspruch 1, wobei ein nautisches Modul (3), aufweisend eine Stützstruktur (47), eine Handwinde (51) und eine klappbare Plattform (46), welche aus drei Stützstrukturen (35) hergestellt ist, welche mit Hilfe von Profilabschnitten (39 - 39.1 und 39.2) miteinander verbunden sind, umfassend Rollenträger (48) an den Enden der Stützstrukturen (35) und Radträger (49) an den Seitenwänden der Strukturen, ferner umfassend eine Beladungsrolle (50) an dem freien Ende des Profilabschnitts (39) und zwei Sätze von Rollenträgern (48) und zwei Sätze von Radstützen (49) auf dem oberen Teil und dem geneigten Abschnitt der Verstärkungen (18) auf dem selbsttragenden Chassis (9), als ein zusätzliches Modul vorgesehen ist, welches mit Schnellverschlussbeschlägen (17) anzubringen ist.

10. Modularer Anhänger nach Anspruch 9, wobei die Stützstruktur (47) mit erhöhten Seiten in Bezug auf ihre Basis ausgelegt ist, umfassend Rollenträger (48) auf jeder Seite und Radstützen (49) auf den geneigten Abschnitten, umfassend eine Klemmstütze (47.1) an der Unterseite ihres Mittelabschnitts, um an die Struktur der Anhängestange (10) zu koppeln.

11. Modularer Anhänger nach Anspruch 1, wobei ein spezielles Transportmodul (5), aufweisend eine klappbare Plattform (52), bestehend aus drei Stützstrukturen (54), welche durch Profilabschnitte (39 bis 39.1 und 39.2) miteinander verbunden sind; eine Führungsbaugruppe (53), welche von zwei Führungsabschnitten (42) gebildet ist, welche miteinander verbunden sind und an die Anhängestange (10) mit Hilfe von an ihrem unteren Teil ausgerüsteten Profilen (53.1) gekoppelt sind; und eine Handwinde (51), als ein zusätzliches Modul vorgesehen ist, welches mit Schnellverschlussbeschlägen (17) anzubringen ist.

12. Modularer Anhänger nach Anspruch 1, wobei ein Gepäckträgermodul (6), aufweisend einen abklappbaren Kasten (55) und ein hinteres Modul (32), als ein zusätzliches Modul vorgesehen ist, welches mit Schnellverschlussbeschlägen (17) anzubringen ist.

13. Modularer Anhänger nach Anspruch 1, wobei ein Mischlastmodul (7), aufweisend eine Plattform (56), welche mit verschiedenen Strukturabschnitten ausgelegt ist, um eine flache, rechteckige Plattform zu bilden, auf welcher permanente oder abnehmbare Kugeln (24) angebaut sind, welche an einer Stützstruktur (35) mit Verstärkungen (36) an beiden Enden angebracht ist, welche mit erhöhten Seiten in Bezug auf ihre Basis ausgebildet ist und welche einen auf der Stützstruktur (35) angebauten Profilabschnitt (39) aufweist, welcher das selbsttragende Chassis (9) verbindet, als ein zusätzliches Modul vorgesehen ist, welches mit Schnellverschlussbeschlägen (17) anzubringen ist.

14. Modularer Anhänger nach einem der vorhergehenden Ansprüche, wobei die Baugruppe, welche durch die Kopplung des Hauptrahmenmoduls (1) mit einem der in der Erfindung beschriebenen Module (2-7) gebildet wird, als eine einzelne Einheit geklappt werden kann, und das Hauptrahmenmodul (1) und alle zusätzlichen Module (2-7) getrennt geklappt werden können.

## Revendications

1. Une remorque pliante modulaire qui peut être attelée à des véhicules à moteur, comprenant un module de cadre principal (1) qui comprend un assemblage de barre d'attelage (10, 23) un châssis autoportant (9) équipé d'une structure de base et de poignées de connexion (12), de garde-boues (13), un accouplement de barre d'attelage (14) et un essieu avec des roues (15), **caractérisé en ce que** la structure de base du châssis autoportant (9) est configurée avec un renfoncement central équipé d'un profilé de renfort (16), sur lequel d'autres modules additionnels (2-7) peuvent être fixés au moyen de dispositifs de fixation rapide (17), l'espace entre les côtés et le renfoncement central étant couvert par un renfort (18) plié de sorte à présenter une forme de « Z » ;
l'assemblage de barre d'attelage (10, 23) comprend au minimum deux sections :
- une section avant (10.1) avec une tête de couplage (19),
- une section centrale (10.2) et une section arrière (10.3) qui s'accouplent avec l'accouplement de barre d'attelage (14) sur le châssis autoportant (9),
- la section avant (10.1) étant accouplée à la section centrale (10.2) au moyen de deux plaques de fixation (20) positionnées des deux côtés des sections et de sorte à se faire face, jointes ensemble au moyen d'un dispositif d'ancrage (21), d'un dispositif d'auto-ancrage (57) et d'une goupille (22) placée sur la section inférieure de la barre d'attelage (10),
- la section centrale (10.2) étant accouplée à la section arrière (10.3) au moyen de deux plaques de fixation (20) positionnées des deux côtés des sections et de sorte à se faire face, jointes ensemble au moyen d'un dispositif d'ancrage (21), d'un dispositif d'auto-ancrage (57) et d'une goupille (22) placée sur la section supérieure de la barre d'attelage (10),
- et **en ce que** le module de cadre principal (1) comprend deux étriers de support avec roues rétractables (11).

2. Une remorque modulaire selon la Revendication 1, **étant précisé que** l'assemblage de barre d'attelage (23) est équipé de boules (24), boules avec support (24.1) et ensemble de boules (24.2) fixés de manière permanente ou amovible.

3. Une remorque modulaire selon la Revendication 1, **étant précisé qu'un** module pour lampes et plaque d'immatriculation (8) comprenant une structure rectangulaire avec deux poches latérales dans lesquelles les lampes (25) sont logées, créant un espace entre les deux poches dans lequel la plaque d'immatriculation (26) est logée, et qui comprend des dispositifs de fixation (27) sur l'arrière, est envisagé sous forme de module additionnel pouvant être fixé au moyen de dispositifs de fixation.

4. Une remorque modulaire selon la Revendication 1, **étant précisé qu'**un module de transport de motocyclette (2) comprenant un assemblage de blocage de la roue (29), un assemblage de guide de la roue (30) et une plateforme pliante (28) formée par un module arrière (32), un module central (33) et un module avant (34) est envisagé sous forme de module additionnel pouvant être fixé au moyen d'un dispositif de fixation rapide (17).

5. Une remorque modulaire selon la Revendication 4, **étant précisé que** le module arrière (32) comprend une structure de support (35) avec des renforts (36) aux deux extrémités, configurée avec des côtés surélevés par rapport à sa base, recouverte de plaques de support arrière (37) configurées avec une extension inclinée et dotées d'une fente (38), un accouplement, sur la base de la structure de support (35), une section de profilé (39) connectant le module central (33) au moyen d'un dispositif de fixation rapide (17) ; le module central (33) comprend une structure de support (35) configurée avec des côtés surélevés par rapport à sa base, recouverte de plaques de support centrales (40) configurées avec une extension inclinée, plus grandes que les plaques de support arrière (37) et dotées d'une fente (38), s'accouplant sur la base de la structure de support (35), une section de profilé (39.1) connectant le module avant (34) au moyen d'un dispositif de fixation rapide (17) ; le module avant (34) comprend une structure de support (35) configurée avec des côtés surélevés par rapport à sa base, recouverte de plaques de support avant (41) configurées avec une extension inclinée, plus grandes que les plaques de support centrales (40) et dotées d'une fente (38), s'accouplant sur la base de la structure de support (35), une section de profilé (39.2) connectant l'assemblage de guide de la roue (30) au moyen de dispositifs de fixation rapide (17).

6. Une remorque modulaire selon les Revendications 4 et 5, **étant précisé que** les plaques de support (37-40 et 41) sont connectées les unes aux autres de sorte que les fentes soient alignées dans une disposition en quinconce pour leur permettre d'être ensuite pliées ; de la même manière, les sections de profilé (39-39.1 et 39.2) peuvent être connectées les unes aux autres, en raison de leur différence de dimensions, pour leur permettre ensuite d'être pliées.

7. Une remorque modulaire selon la Revendication 4, **étant précisé que** l'assemblage de blocage de la roue (29) comprend un support connectant la barre d'attelage (10) et un étrier de serrage avec poignées ; et l'assemblage de guide de la roue (30) comprend deux sections-guides (42) connectées l'une à l'autre et couplées à la barre d'attelage (10), comprenant un culbuteur (31) à l'extrémité libre.

8. Une remorque modulaire selon la Revendication 1, **étant précisé qu'**un module de transport de bicyclette (4) comprenant une plateforme pliante (28) et plusieurs étriers de serrage (43), fixés verticalement et répartis régulièrement le long du centre de la plateforme pliante (28), connectée à des ensembles d'étriers de roues (44) fixés sur les plaques de support (37-40 et 41) de la plateforme pliante (28), et comprenant également un support de serrage (45) couplé à la barre d'attelage (10), est envisagé sous forme de module additionnel pouvant être fixé au moyen de dispositifs de fixation rapide (17).

9. Une remorque modulaire selon la Revendication 1, **étant précisé qu'**un module nautique (3) comprenant une structure de support (47), un cabestan manuel (51) et une plateforme pliante (46) constituée par trois structures de support (35), connectées les unes aux autres par des sections de profilés (39-39.1 et 39.2), comprenant des supports de roulettes (48) aux extrémités des structures de support (35) et des supports de roues (49) sur les côtés latéraux desdites structures, comprenant en outre un rouleau de chargement (50) sur le côté libre de la section de profilé (39) et deux ensembles de supports de roulettes (48) et deux ensembles de supports de roues (49) sur la partie supérieure et la partie inclinée des renforts (18) sur le châssis autoportant (9), est envisagé sous forme de module additionnel pouvant être fixé au moyen de dispositifs de fixation rapide (17).

10. Une remorque modulaire selon la Revendication 9, **étant précisé que** la structure de support (47) est prévue avec des côtés surélevés par rapport à sa base, avec des supports de roulettes (48) sur chaque côté et des supports de roues (49) sur les sections inclinées, avec un support de serrage (47.1) dans la partie inférieure de sa section centrale pour coupler la structure à la barre d'attelage (10).

11. Une remorque modulaire selon la Revendication 1, **étant précisé qu'**un module de transport spécial (5) comprenant une plateforme pliante (52) comprenant trois structures de support (54), connectées les unes aux autres avec des sections de profilé (39-39.1 et 39.2) ; un assemblage-guide (53) formé par deux sections-guides (42) fixées ensemble et couplées à la barre d'attelage (10) au moyen de profilés (53.1) fixés sur sa partie inférieure ; et un cabestant manuel (51), est envisagé sous forme de module additionnel pouvant être fixé au moyen de dispositifs de fixation rapide (17).

12. Une remorque modulaire selon la Revendication 1, **étant précisé qu'**un module de transport de bagages (6) comprenant un coffre rabattable (55) et un module arrière (32) est envisagé sous forme de module additionnel pouvant être fixé au moyen de dispositifs de fixation rapide (17).

13. Une remorque modulaire selon la Revendication 1, **étant précisé qu'**un module pour charges mixtes (7) comprenant une plateforme (56) configurée avec plusieurs sections structurelles pour former une plateforme rectangulaire plate, sur laquelle sont fixées des boules permanentes ou amovibles (24), qui se fixe sur une structure de support (35) avec des renforts (36) aux deux extrémités, configurée avec des côtés surélevés par rapport à sa base et avec une section de profilé (39) fixée sur la structure de support (35), s'accouplant au châssis autoportant (9), est envisagé sous forme de module additionnel pouvant être fixé au moyen de dispositifs de fixation rapide (17).

14. Une remorque modulaire selon l'une quelconque des revendications précédentes, **étant précisé que** l'assemblage formé par l'accouplement du module de cadre principal (1) avec l'un quelconque des modules (2-7) décrits dans la présente invention peut être plié de sorte à ne former qu'une seule unité, et le module de cadre principal (1) et tous les modules additionnels (2-7) peuvent être pliés séparément.
